# EUROPÄISCHE PATENTSCHRIFT

(11) **EP 2 204 708 B1**
(45) Veröffentlichungstag und Bekanntmachung des Hinweises auf die Patenterteilung: **20.07.2011**
(21) Anmeldenummer: 08172738.0
(22) Anmeldetag: 23.12.2008
(51) Int. Cl.: G05B 19/18, G05B 19/416

(54) **Verfahren zum Koordinieren der Bewegung zweier Bauteile einer Anordnung**
Method for coordinating the movement of two components of an assembly
Procédé de coordination du mouvement de deux composants d'un agencement

(43) Veröffentlichungstag der Anmeldung: 07.07.2010
(73) Patentinhaber: Siemens Aktiengesellschaft, 80333 München (DE)
(72) Erfinder: May, Torsten, 97638, Frickenhausen (DE); Schlegel, Oleg, 91058, Erlangen (DE)

(56) Entgegenhaltungen:
- EP-A- 1 353 251
- DE-A1- 19 934 044
- JP-A- 2007 328 796
- BECKHOFF: "TwinCAT NC Universelle Fliegende Säge" BECKHOFF TWINCAT, 26. November 2003 (2003-11-26), XP002528614 Verl, Germany
- LENZE: "Cam Designer Professional Erste Schritte" LENZE HANDBUCH, Juli 2003 (2003-07), XP002528615 Germany
- SIEMENS: "Materialvorschub für eine Presse auf Basis von statischen Kurvenscheiben" APPLIKATION ZUR ANTRIEBSTECHNIK, 28. September 2007 (2007-09-28), XP002528616 Germany

## Beschreibung

Die Erfindung betrifft ein Verfahren zum Koordinieren der Bewegung zweier Bauteile einer Anordnung.

Das Koordinieren der Bewegung zweier Bauteile erfolgt bei klassischen Systemen über eine mechanische Kopplung derselben. Das eine Bauteil gibt hierbei eine Bewegung vor, und das andere Bauteil folgt ihm. Dies ist für Achsen die bekannte Kopplung von Leitachse und Folgeachse.

Man ist inzwischen dazu übergegangen, die mechanische Kopplung durch eine elektronische bzw. informationelle Kopplung zu ersetzen: Eine Steuereinrichtung steuert hierbei entsprechende, eine Bewegung bewirkende Motoren an. Die Steuereinrichtung kann Motoren für beide zu synchronisierende Bauteile gleichzeitig ansteuern oder in Abhängigkeit von gegebenenfalls mit Hilfe von Sensoren gewonnenen Informationen über die Bewegung des einen Bauteils nur das andere Bauteil bewegen lassen. Vom letzteren Fall wird vorliegend ausgegangen: Das eine Bauteil ist das Leitbauteil, das andere Bauteil das Folgebauteil. Die Bewegung impliziert eine Änderung der Position, wobei es sich auch um eine Drehung eines z. B. achssymmetrischen Bauteils um eine Achse handeln kann. Zu jeder Art von Bewegung lässt sich eine solche Position durch Angabe eines Positionswerts definieren. Zu dem Leitbauteil soll ein Leitpositionswert angebbar sein, zu dem Folgebauteil ein Folgepositionswert. Das Koordinieren der Bewegung zweier Bauteile unter Einsatz einer Steuereinheit bedarf nun zweier Schritte: In einem ersten Schritt muss abstrakt festgelegt werden, wie die koordinierte Bewegung aussehen soll. In einem zweiten Schritt muss festgelegt werden, wie bewirkt werden kann, dass diese Sollbewegung tatsächlich zumindest näherungsweise erfolgt.

Die Sollbewegung wird vorliegend als "Bewegungsmuster" bezeichnet. Die Erfindung geht von einem spezifischen Fall aus, nämlich dass eine Bewegung des Folgebauteils erst ab einer bestimmten Position des Leitbauteils eingeleitet wird.

Ein Beispiel hierfür ist eine Abkantpresse: In dieser bewegt sich ein Stößel geradlinig zu einem Unterwerkzeug hin. Zwischen Stößel und Unterwerkzeug befindet sich das abzukantende Blech. Während des Abkantens soll ein Endabschnitt des Blechs durch eine Biegehilfe nachgeführt werden. Eine Drehung einer solchen Biegehilfe ist dann einzuleiten, wenn der Stößel das Blech erreicht hat. Zuvor ist vorgesehen, dass die Biegehilfe unbeweglich bleibt.

Formuliert man dies unter Verwendung der oben gewählten Begriffe, so lässt sich sagen, dass allen Leitpositionswerten auf einer ersten Seite eines vorbestimmten Schwellwerts ein konstanter Folgepositionswert zugeordnet ist und ab Erreichen der zweiten Seite des vorbestimmten Schwellwerts sich bei einer Änderung des Positionswerts auch der Folgepositionswert ändert. Unter dem Begriff "Seite eines Schwellwerts" wird hierbei eine Seite auf einem Strahl verstanden, auf dem die Leitpositionswerte aufgetragen sind. Die erste Seite des vorbestimmten Schwellwerts kann bei einer Variante diejenigen Leitpositionswerte umfassen, die kleiner als der vorbestimmte Schwellwert sind, so dass dann die zweite Seite des vorbestimmten Schwellwerts diejenigen Leitpositionswerte beinhaltet, die größer als der vorbestimmte Schwellwert sind. Es kann jedoch auch genau umgekehrt sein: Auf der ersten Seite sind die größeren Werte, auf der zweiten Seite sind die unteren Werte. Das Übertreten des Schwellwerts kann bedeuten, dass der Schwellwert von unten erreicht und dann überschritten wird, es kann aber genau so gut auch bedeuten, dass der Schwellwert von oben erreicht und dann unterschritten wird.

Die Umsetzung eines Bewegungsmusters durch Steuereinheiten erfolgt bisher durch das Softwaresystem SIMOTION aus dem Hause der Anmelderin der vorliegenden Anmeldung. Diese Software ermöglicht es, die Funktionalität eines Gleichlaufs nach dem Vorbild eines Getriebes mit Antriebsrad und Abtriebsrad bzw. -rädern elektronisch zu realisieren. Hierbei kann das Konzept von Leitachse und Folgeachse eingesetzt werden. Es sind auch komplexe Zusammenhänge in der Bewegung der zu koordinierenden beiden Bauteile darstellbar, wie sie mechanisch durch Einsatz einer Kurvenscheibe berücksichtigt werden können.

Die bekannte Software realisiert eine diskrete Regelung. Hierbei wird abhängig von dem Leitpositionswert gemäß dem Bewegungsmuster ein Soll-Folgepositionswert bestimmt. Es steht ein Ist-Folgepositionswert zur Verfügung, z. B. aufgrund einer Sensormessung oder durch Rückschluss aus Steuerbefehlen an einen Motor. Der Ist-Folgepositionswert wird mit dem Soll-Folgepositionswert verglichen. In Abhängigkeit vom Ergebnis des Vergleichs wird ein Positionierbefehl erzeugt. Ein Positionierbefehl soll grundsätzlich geeignet sein, eine Ansteuerung des Motors zum Bewegen des Folgebauteils zu bewirken. Dies muss vorliegend nicht bei jedem als Ergebnis des Vergleichs erzeugten Positionierbefehl der Fall sein, es kann auch als Positionierbefehl ein "Nullbefehl" ausgegeben werden, der gerade bewirkt, dass der Motor nicht aktiv wird. Das Absetzen von Positionierbefehlen erfolgt typischerweise zyklisch. Hierzu wird der Soll-Folgepositionswert im selben Zyklus bestimmt. Dieses Bestimmen kann ein einfaches Auslesen aus einer Tabelle beinhalten, genauso aber auch ein Berechnen, wenn z. B. Interpolation vorgesehen bzw. notwendig ist.

Bei dem Bewegungsmuster der oben beschriebenen Art wird bisher eine Regelung erst mit Erreichen bzw. Übertreten des vorbestimmten Schwellwerts begonnen: Wird der Schwellwert erreicht, was sich bei diskreter Erfassung von Leitpositionswerten durch ein Erreichen der zweiten Seite des Schwellwerts niederschlägt, wird das Generieren von Soll-Folgepositionswerten und damit von Positionierbefehlen getriggert.

Es hat sich gezeigt, dass gerade in der Anfangsphase nicht genau das gewünschte Bewegungsmuster erzielt wird, sondern dass Abweichungen zwischen der gewünschten und der tatsächlichen Bewegung auftreten. Insbesondere, wenn sich bisher die Geschwindigkeit des Leitbauteils geändert hat, traten beim Synchronisieren des Leitbauteils mit dem Folgebauteil Überschwinger auf. Genau so traten nach Beendigung der Gleichlaufregelung unter Umständen solche Überschwinger auf.

Es ist Aufgabe der Erfindung, ein Verfahren zum Koordinieren der Bewegung zweier Bauteile einer Anordnung gemäß dem Oberbegriff von Patentanspruch 1 dahingehend weiterzubilden, dass die tatsächliche Bewegung eher und besser mit der gewünschten Bewegung übereinstimmt.

Die Aufgabe wird durch ein Verfahren mit den Merkmalen gemäß Patentanspruch 1 gelöst: Demgemäß erfolgen das Bestimmen eines Soll-Folgepositionswerts und das Erzeugen eines Positionierbefehls in Folge davon bereits dann, wenn die Leitpositionswerte noch auf der ersten Seite des Schwellwerts liegen. Mit anderen Worten beginnt die Regelung bereits, bevor die Bewegung des Folgebauteils eingeleitet wird. Der Soll-Folgepositionswert wird dann im Regelfall mit dem konstanten Folgepositionswert übereinstimmen, denn das Folgebauteil befindet sich noch in Ruhe. Es ist Erkenntnis der vorliegenden Erfindung, dass gerade die Ruhephase des Folgebauteils dazu genutzt werden kann, einen stabilen Grundzustand für die Regelung zu schaffen, das Regelsystem ist somit darauf vorbereitet, dass der vorbestimmte Schwellwert erreicht wird und sich der Soll-Folgepositionswert ändert. Dann treten keine Überschwinger auf, sondern das System arbeitet stabil.

Die Erfindung kann spiegelsymmetrisch nach Beendigung einer Bewegung eingesetzt werden. Bevorzugt erfolgt dies als Ergänzung zu dem Verfahren gemäß Patentanspruch 1, nämlich bei Beendigung der Bewegung des Folgebauteils. Eine solche Beendigung kann in einem Bewegungsmuster vorgesehen sein, das davon ausgeht, dass sich der Leitpositionswert nach Einleiten der Bewegung des Folgebauteils in dieselbe Richtung weiter ändert wie zuvor, also entweder dauerhaft steigt oder dauerhaft sinkt. Es lässt sich dann ein weiterer Schwellwert definieren, der in der Änderungsrichtung hinter dem vorbestimmten Schwellwert liegt, also auf der zweiten Seite desselben liegt. Wird auch dieser weitere Schwellwert übertreten (überschritten oder unterschritten, also die der dem vorbestimmten Schwellwert abgewandte Seite des weiteren Schwellwerts erreicht) beinhaltet das Bewegungsmuster, dass das Folgebauteil wieder stehen bleibt, also allen Leitpositionswerten ein konstanter Folgepositionswert zugeordnet ist. Dann wird die Erfindung in dem zusätzlichen Aspekt dadurch realisiert, dass das Bestimmen eines Soll-Folgepositionswerts und das Erzeugen eines Positionierbefehls in Folge davon noch weiter erfolgt, wenn die Leitpositionswerte auf der dem vorbestimmten Schwellwert abgewandten Seite des weiteren Schwellwerts liegen. Mit anderen Worten wird die Regelung also auch nach Beendigung der Bewegung des Folgebauteils fortgesetzt. Dann wird die Bewegung stabil ohne Artefakte angehalten, es kommt nicht mehr zu Überschwingern.

Die Erfindung findet ihre bevorzugte Anwendung dann, wenn ein mechanisches Getriebe simuliert wird, das die Bewegung des Folgebauteils in Abhängigkeit von der des Leitbauteils bestimmt. Es lässt sich dann der so genannte Getriebefaktor ermitteln. Der Getriebefaktor ist ein Proportionalfaktor. Bei geeigneter Definition von Leitpositionswert und Folgepositionswert, bedeutet dies, dass die Soll-Folgepositionswerte für Leitpositionswerte auf der zweiten Seite des vorbestimmten Schwellwerts linear von diesen Leitpositionswerten abhängig sind, entweder ständig oder anhaltend bis zu einem weiteren Schwellwert hin, insbesondere dem oben genannten Schwellwert, ab dem die Bewegung angehalten wird.

Wie eingangs bereits dargestellt, ist das erfindungsgemäße Verfahren insbesondere zum Einsatz in einer Abkantpresse geeignet. Dann ist der Stößel, der sich geradlinig zu einem Unterwerkzeug hinbewegt, das Leitbauteil, wobei dessen Relativstellung relativ zur ersteren den Leitpositionswert bestimmt, der z. B. die Dimension einer Länge hat. Bei der Abkantpresse dreht sich die Biegehilfe gemäß dem Bewegungsmuster ab Erreichen einer vorbestimmten Relativstellung. Der Drehwinkel bestimmt dann den Folgepositionswert, z. B. kann letzterer einfach selbst als Winkel angegeben sein.

Nachfolgend wird eine bevorzugte Ausführungsform der Erfindung unter Bezug auf die Zeichnung beschrieben, in der
FIG 1 schematisch eine an sich bekannte Abkantpresse veranschaulicht,
FIG 2 eine graphische Darstellung ist, anhand derer das Verfahren gemäß dem Stand der Technik erörtert wird und
FIG 3 ein graphische Darstellung analog zu der graphischen Darstellung aus FIG 2 ist, anhand derer das erfindungsgemäße Verfahren dargestellt wird.

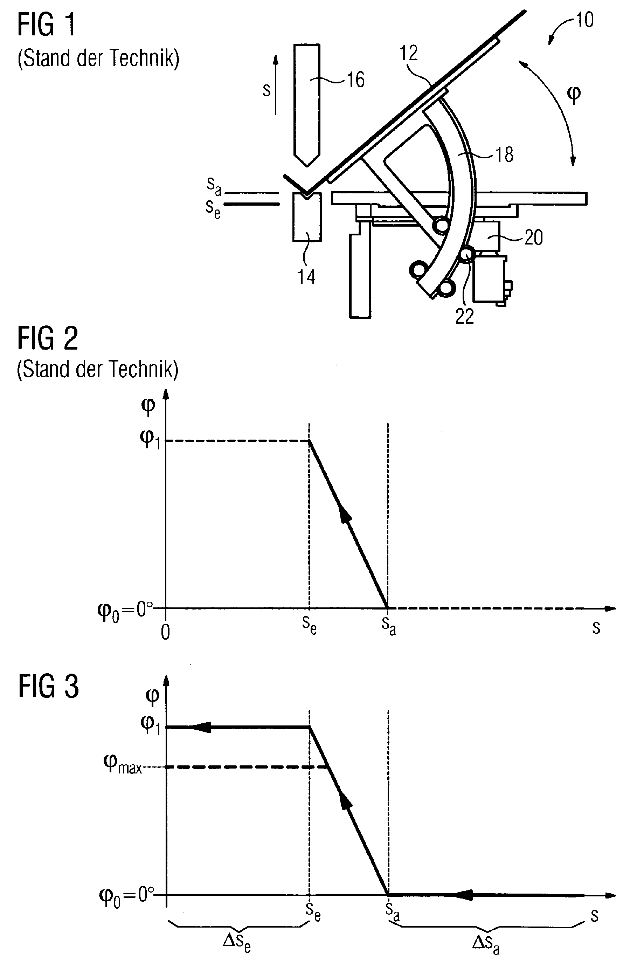

Eine in FIG 1 teilweise nur schematisch gezeigte und im Ganzen mit 10 bezeichnete Abkantpresse dient dazu, eine Kante in ein Blech 12 einzubringen. Das Blech 12 wird auf ein Unterwerkzeug 14 gelegt, und von der entgegengesetzten Seite bewegt sich ein Stößel 16 auf das Blech 12 zu. Sobald der Stößel 16 das Blech 12 berührt, entsteht eine Biegestelle. Dadurch werden die Enden des Blechs 12 etwas angehoben (aufgeworfen). Um eine formschöne und stabile Kante zu erzeugen, wird nun ein längeres Ende des Blechs 12 durch eine Biegehilfe 18 abgestützt. Die Bewegung der Biegehilfe 18 muss hierbei mit der des Stößels 16 synchronisiert werden. Man sieht den Stößel 16 hierbei als Leitbauteil (abstrakt als "Leitachse") an, dem die Biegehilfe 18 als Folgebauteil ("Folgeachse") nachgeordnet ist. Es wird davon ausgegangen, dass die Stellung des Stößels 16 als Leitbauteil bekannt ist. Die Stellung lässt sich durch eine Streckengröße s angeben. Es wird ferner davon ausgegangen, dass bei Erreichen der Stellung Sₐ durch den Stößel 16 die Biegehilfe 18 beginnen soll, sich gemäß dem Winkel ϕ zu drehen. Die Drehung soll beendet sein, sobald der Stößel 16 die Stellung sₑ erreicht. In an sich bekannter Weise werden die Positionswerte für die Position des Stößels 16 einer in den Figuren nicht gezeigten Steuereinrichtung zugeführt, die die Aufgabe hat, einen Motor 20 anzusteuern, der die Biegehilfe 18 dreht, vorliegend über ein Reibrad 22.

Wie die Steuereinrichtung im Stand der Technik arbeitet, wird vorliegend anhand von FIG 2 erläutert: Es ist davon ausgegangen, dass sich die Größe s beim Herabfahren des Stößels 16 verkleinert und auf den Wert sₐ zu bewegt. Die Biegehilfe 18 steht hierbei so, dass der Winkel ϕ₀=0° eingestellt ist. Sobald der Wert sₐ erreicht ist, setzt eine Regelung ein: In Abhängigkeit von dem jeweils gemessenen Wert der Größe s wird in der Folge ein Soll-Wert für den Winkel ϕ bestimmt. Dieser Soll-Wert wird mit einem Ist-Wert verglichen, der aufgrund von Messwerten eines in FIG 1 nicht gezeigten Sensors bekannt ist oder aus zuvor abgegebenen Steuerbefehlen an den Motor 20 geschlossen werden kann. FIG 2 zeigt die Sollwerte: Die Größe ϕ zwischen den Werten sₐ und sₑ ist linear von der Größe s abhängig, bis der Wert ϕ₁ erreicht wird. Sobald der Wert sₑ erreicht ist und damit der Sollwert genau gleich ϕ₁ ist, wird die Regelung beendet, es werden keine Steuerbefehle an den Motor 20 mehr gegeben, so dass die Bewegung der Biegehilfe 18 angehalten wird.

Im Stand der Technik kommt es nun sowohl im Bereich des Wertepaares sₐ, ϕ₀, als auch im Bereich des Wertepaares sₑ, ϕ₁ zu Überschwingern, es stimmen die tatsächlichen Werte von ϕ also nicht mit den in FIG 2 gezeigten gewünschten Werten überein.

Um dem zu begegnen, ist folgende Maßnahme vorgesehen, die nachfolgend anhand von FIG 3 erläutert wird: Bereits während eines Streckenintervalles Δₛₐ vor Erreichen des Wertes sₐ wird mit der Regelung begonnen. Sämtlichen Werten oberhalb von sₐ wird somit der Wert ϕ₀ als Sollwert für den Winkel ϕ zugeordnet. Grundsätzlich sollte diese frühzeitige Regelung nicht mit einer Bewegung der Biegehilfe 18 einhergehen, weil der Ist-Wert für den Winkel ϕ genau gleich dem Soll-Wert sein sollte, so dass die abgegebenen Positionierbefehle lediglich beinhalten, dass der Motor 20 nicht aktiv werden muss.

Zwischen den Werten sₐ und sₑ gibt es dann den oben bereits beschriebenen linearen Zusammenhang zwischen der Größe s und der Größe ϕ. Der Proportionalfaktor lässt sich als "Getriebefaktor" bezeichnen, dadurch wird angegeben, dass die Synchronisierung zwischen dem Stößel 16 und der Biegehilfe 18 nach Art eines mechanischen Getriebes erfolgt. Für die gesamte Regelung lässt sich der Begriff "Kurvenscheibengleichlauf" verwenden, denn die Regelung hat dieselbe Wirkung, wie sie mechanisch eine Kurvenscheibe hat.

Die Regelung wirkt beim Kurvenscheibengleichlauf auch über den Wert sₑ hinaus, vorliegend also zu kleineren Werten hin während eines Intervalls Δₛₑ fortgesetzt.

Durch das frühzeitige Einleiten der Regelung und das Fortsetzen werden Überschwinger beim Einleiten und Beenden der Biegung der Biegehilfe 18 vermieden. Die Biegehilfe 18 wird präzise bei Erreichen des Wertes sₐ wie gewünscht in Bewegung gesetzt und bei Erreichen des Wertes sₐ präzise wie gewünscht angehalten.

Die Kurvenscheibengleichlaufregelung ermöglicht es auch, einen maximalen Soll-Wert ϕₘₐₓ für ϕ vorzugeben. Da die Regelung fortgesetzt wird, ist dann gewährleistet, dass dieser Wert ϕₘₐₓ nicht überschritten wird.

Das anhand von FIG 3 beschriebene Verfahren, das der Realisierung eines Kurvenscheibengleichlaufs bei elektronischer Steuerung entspricht, ermöglicht hochdynamische Synchronisierungsvorgänge aus dem Stillstand des Folgebauteils und in dessen Stillstand hinein unter Einhaltung eines zuvor festgelegten Bewegungsmusters.

## Patentansprüche

1. Verfahren zum Koordinieren der Bewegung zweier Bauteile einer Anordnung zum Zwecke des Erhalts eines Bewegungsmusters, wobei die Position eines Leitbauteils durch einen Leitpositionswert angebbar ist und die Position eines Folgebauteils durch einen Folgepositionswert angebbar ist und das Bewegungsmuster beinhaltet, dass allen Leitpositionswerten auf einer ersten Seite eines vorbestimmten Schwellwerts ein konstanter Folgepositionswert zugeordnet ist und ab Erreichen der zweiten Seite des vorbestimmten Schwellwerts sich bei einer Änderung des Leitpositionswerts auch der Folgepositionswert ändert, und wobei bei dem Verfahren abhängig von dem Leitpositionswert gemäß dem Bewegungsmuster ein Soll-Folgepositionswert bestimmt wird, mit einem Ist-Folgepositionswert verglichen wird und in Abhängigkeit vom Ergebnis des Vergleichs ein Positionierbefehl erzeugt wird, wobei Positionierbefehle eine Ansteuerung eines Motors zum Bewegen des Folgebauteils bewirken,
**dadurch gekennzeichnet,**
**dass** das Bestimmen eines Sollfolgepositionswerts und das Erzeugen eines Positionierbefehls in Folge davon bereits erfolgt, wenn die Leitpositionswerte auf der ersten Seite des Schwellwerts liegen.

2. Verfahren nach Anspruch 1,
**dadurch gekennzeichnet,**
**dass** ein weiterer Schwellwert definiert ist, der auf der zweiten Seite des vorbestimmten Schwellwerts liegt, und wobei das Bewegungsmuster beinhaltet, dass ab Erreichen der dem vorbestimmten Schwellwert abgewandten Seite des weiteren Schwellwerts wieder allen Leitpositionswerten ein konstanter Folgepositionswert zugeordnet ist,
**dadurch gekennzeichnet,**
**dass** das Bestimmen eines Soll-Folgepositionswerts und das Erzeugen eines Positionierbefehls in Folge davon noch weiter erfolgt, wenn die Leitpositionswerte auf der dem vorbestimmten Schwellwert abgewandten Seite des weiteren Schwellwerts liegen.

3. Verfahren nach Anspruch 1 oder 2,
**dadurch gekennzeichnet,**
**dass** die Soll-Folgepositionswerte für Leitfolgepositionswerte auf der zweiten Seite des vorbestimmten Schwellwerts zumindest bis zu einem bzw. dem weiteren Schwellwert linear von diesen abhängig sind.

4. Verfahren nach einem der vorhergehenden Ansprüche, das bei einer Abkantpresse (10) eingesetzt wird, bei der sich ein Stößel (16) als Leitbauteil geradlinig zu einem Unterwerkzeug (14) hin bewegt und seine Relativstellung zu dem Unterwerkzeug den Leitpositionswert bestimmt, und bei der sich eine Biegehilfe (18) gemäß dem Bewegungsmuster ab Erreichen einer vorbestimmten Relativstellung dreht und ihr Drehwinkel den Folgepositionswert bestimmt.

## Claims

1. Method for coordinating the movement of two components of an arrangement for the purpose of obtaining a movement pattern, it being possible to specify the position of a leading component by a leading position value, and to specify the position of a following component by a following position value, and it being inherent in the movement pattern that all the leading position values on a first side of a predetermined threshold value are assigned a constant following position value and, starting from when the second side of the predetermined threshold value is reached, the following position value also changes in the event of a change in the leading position value, and a desired following position value being determined in the method as a function of the leading position value in accordance with the movement pattern and being compared with an actual following position value, and a positioning command being produced as a function of the result of the comparison, positioning commands driving a motor in order to move the following component, **characterized in that** a desired following position value is determined and a positioning command is already produced as a consequence thereof when the leading position values lie on the first side of the threshold value.

2. Method according to Claim 1, **characterized in that** there is defined a further threshold value which lies on the second side of the predetermined threshold value, it being inherent in the movement pattern that, starting from when the side, averted from the predetermined threshold value, of the further threshold value is reached, all the leading position values are again assigned a constant following position value, **characterized in that** a desired following position value is determined and yet a further positioning command is produced as a consequence thereof when the leading position values lie on the side of the further threshold value averted from the predetermined threshold value.

3. Method according to Claim 1 or 2, **characterized in that**, for leading position values on the second side of the predetermined threshold value, the desired following position values are a linear function of said leading position values, at least up to one or the further threshold value.

4. Method according to one of the preceding claims which is used with a press brake (10) in the case of which a ram (16) is moved rectilinearly as leading component towards a lower die (14) and its position relative to the lower die determines the leading position value, and in the case of which a bending aid (18) rotates in accordance with the movement pattern starting from when a predetermined relative position is reached, and the angle of rotation of said bending aid determines the following position value.

## Revendications

1. Procédé de coordination du mouvement de deux composants d'un agencement en vue d'obtenir un modèle de mouvement, la position d'un composant menant pouvant être indiqué par une valeur de position menante et la position d'un composant suivant pouvant être indiqué par une valeur de position suivante et comportant le modèle de mouvement suivant lequel il est affecté à toutes les valeurs de position menante, d'un premier côté d'une valeur de seuil déterminée à l'avance, une valeur de position suivante constante et, à partir du moment où l'on atteint le deuxième côté de la valeur de seuil déterminée à l'avance, la valeur de position suivante se modifie aussi lors d'une modification de la valeur de position menante, et dans lequel, dans le procédé, on détermine une valeur de position suivante de consigne en fonction de la valeur de position menante suivant le modèle de mouvement, on la compare à une valeur de position suivante réelle et, en fonction du résultat de la comparaison, on produit une instruction de mise en position des instructions de mise en position, provoquant une commande d'un moteur pour mettre en mouvement le composant suivant,
**caractérisé**
**en ce que** l'on effectue la détermination d'une valeur de position suivante de consigne et la production d'une instruction de mise en position à la suite de cela, déjà lorsque les valeurs de position menante se trouvent du premier côté de la valeur de seuil.

2. Procédé suivant la revendication 1,
**caractérisée**
**en ce que** l'on définit une autre valeur de seuil, qui se trouve du deuxième côté de la valeur de seuil déterminée à l'avance, et dans lequel le modèle de mouvement comporte le fait que à partir du moment où l'on a atteint le côté de l'autre valeur de seuil éloigné de la valeur de seuil déterminée à l'avance, on affecte à nouveau une valeur de position suivante constante à toutes les valeurs de position menantes,
**caractérisé**
**en ce que** on continue encore à effectuer la détermination d'une valeur de position suivante de consigne et la production d'une instruction de mise en position à la suite de cela, lorsque les valeurs de position menantes se trouvent du côté de l'autre valeur de seuil éloignée de la valeur de seuil déterminée à l'avance.

3. Procédé suivant la revendication 1 ou 2,
**caractérisée**
**en ce que** les valeurs de position menantes de consigne pour des valeur de consigne menantes du deuxième côté de la valeur de seuil déterminée à l'avance dépendent, au moins jusqu'à l'une ou l'autre valeur de seuil, linéairement de celles-ci.

4. Procédé suivant l'une des revendications précédentes, qui utilise une presse ( 10 ) plieuse dans laquelle un poussoir se déplace en tant que composant menant en ligne droite vers un outil ( 14 ) inférieur et sa positon relative par rapport à l'outil inférieur détermine la valeur de position menante et dans lequel un auxiliaire ( 18 ) de cintrage tourne suivant le modèle de mouvement, lorsqu'une position relative déterminée à l'avance est atteinte, et son angle de rotation détermine la valeur de position suivante.
